Europäisches Patentamt

European Patent Office

Office européen des brevets

(19)

(11) Numéro de publication: **0 144 372**
**B1**

(12) # FASCICULE DE BREVET EUROPÉEN

(45) Date de publication du fascicule du brevet:
02.08.89

(21) Numéro de dépôt: 84902025.0

(22) Date de dépôt: 01.06.84

(86) Numéro de dépôt international:
PCT/FR 84/00142

(87) Numéro de publication internationale:
WO 84/04977 (20.12.84 Gazette 84/30)

(51) Int. Cl.⁴: **G 05 B 19/04,** G 05 B 9/02,
G 06 F 3/00

(54) **DISPOSITIF D'ENTREE/SORTIE CONNECTABLE PAR UN BUS DE LIAISON DE DONNEES ET D'ADRESSES A UNE UNITE CENTRALE D'UN AUTOMATE PROGRAMMABLE.**

(30) Priorité: 03.06.83 FR 8309539

(43) Date de publication de la demande:
19.06.85 Bulletin 85/25

(45) Mention de la délivrance du brevet:
02.08.89 Bulletin 89/31

(84) Etats contractants désignés:
BE DE GB NL SE

(56) Documents cité:
EP-A-0 123 595
DE-A-2 830 435
DE-A-2 944 711
US-A-3 964 026
US-A-4 137 565
US-A-4 322 771

(73) Titulaire: TELEMECANIQUE, 43- 45, Boulevard
Franklin Roosevelt, F-92504 Rueil- Malmaison
Cedex (FR)

(72) Inventeur: HEITZ, Lionel, Les Vergers du Château,
F-32190 Crolles (FR)
Inventeur: PERGENT, Jacky, Rue de la Vésubie Le
Planet, F-06510 Carros le Neuf (FR)
Inventeur: PENOT, Olivier, Les Bastides de la Mer
Avenue de Nice, F-06600 Antibes (FR)
Inventeur: QUATSE, Jesse, Thomas, MAXITRON
CORP. 21, Tamal Vista Boulevard Suite 200,
Corte Madera, CA 94925 (US)

(74) Mandataire: Marquer, Francis, CABINET
MOUTARD 35, avenue Victor Hugo Résidence
Champfleury, F-78190 Voisins- le- Bretonneux (FR)

EP 0 144 372 B1

**Description**

La présente invention concerne un procédé et un dispositif pour la protection et le contrôle de la transmission des informations entre l'unité centrale d'un automate programmable et les capteurs et/ou les actionneurs du processus commandé par ledit automate.

D'une manière générale on sait qu'un automate programmable fait intervenir un processeur permettant d'assurer la commande ordonnée des actionneurs du processus en fonction des informations fournies par les détecteurs et ce, selon une séquence de fonctionnement déterminée par un programme. Pour assurer sa liaison avec le processus, l'automate comprend une pluralité d'éléments de connexion décomposée en deux ensembles, à savoir:

- Un ensemble d'éléments de connexion d'entrée sur lesquels viennent se brancher les détecteurs ou les capteurs, et

- Un ensemble d'éléments de connexion de sortie sur lesquels viennent se brancher les actionneurs du processus. Le processeur comprend, de façon classique une unité centrale, habituellement à microprocesseur dans laquelle le transfert des informations s'effectue par l'intermédiaire de Bus (Bus des données, Bus des adresses, Bus de commande).

Cette unité centrale communique avec l'extérieur, et en particulier avec les éléments de connexion d'Entrée/Sortie de l'automate au moyen de circuits d'Entrée/Sortie reliés aux Bus générés par le microprocesseur.

Généralement ces circuits d'Entrée/Sortie sont réalisés sur une ou plusieurs cartes de circuit imprimé regroupant chacune un nombre prédéterminé de voies d'entrée et/ou de sortie.

Chacune de ces voies aboutit à une entrée ou à une sortie multipolaire matérialisée par une plage de connexion par pôle sur le circuit imprimé. On notera à ce sujet qu'on utilise le plus souvent des entrées et des sorties bipolaires et, accessoirement des sorties tripolaires (sorties alternatives).

Ainsi, par le brevet US-4 322 771, il a déjà été proposé une carte de sortie de ce genre dans laquelle des moyens de découplage galvanique sont utilisés pour effectuer le transfert des signaux de commande, soit par l'intermédiaire d'un triac principal, soit par l'intermédiaire d'un triac auxiliaire servant à court-circuiter la charge en cas de défaut.

Habituellement, dans ces dispositifs, les plages de connexion peuvent être avantageusement disposées le long d'une bordure du circuit imprimé, bordure sur laquelle vient se brancher un bornier, par exemple du type de celui décrit dans la Demande de brevet n° 8 306 175 deposée en France le 15 Avril 1983 au nom de la Demanderesse et correspondant au document EP-A-123 595. Ce bornier est plus particulièrement destiné à assurer une liaison déconnectable entre les susdites plages et les conducteurs correspondants reliant l'automate aux détecteurs et aux actionneurs du processus.

Ainsi, dans un automate du genre de celui précédemment mentionné, qui constitue un art antérieur aux termes de l'article 54(3), l'invention a tout d'abord pour but la réalisation de circuits d'Entrée/Sortie selon lesquels les entrées et les sorties de chacune de ces voies se trouvent convenablement isolées des conducteurs du bus de l'unité centrale de manière à assurer une protection de l'unité centrale contre toute perturbation survenant au niveau du bornier ou des circuits extérieurs (détecteurs, actionneurs) ces perturbations pouvant notamment consister en des surcharges, des courts-circuits, ou des défaillances de l'alimentation externe.

Par ailleurs, l'invention a en outre pour but d'adjoindre aux circuits d'Entrée/Sortie précédemment mentionnés, des circuits respectifs permettant de déceler des défauts de transmission se traduisant notamment par une non concordance entre les signaux transmis et reçus par le bus de l'unité centrale et les signaux correspondants transmis par les détecteurs ou reçus par les actionneurs, cette non concordance pouvant être notamment due:

- à la non exécution d'ordre de sortie, par exemple du fait de surcharges, de courts-circuits, ou de défaillances de l'alimentation externe non perçues par l'unité centrale;

- à un forçage à zéro d'une entrée et à la non alimentation d'un actionneur, par déconnexion du bornier non perçue par l'unité centrale;

- à un forçage à zéro ou à 1 de certaines voies d'Entrée/ Sortie, dû à des défaillances des circuits d'interface non perçues par l'unité centrale.

Pour parvenir à ces résultats, l'invention propose un dispositif d'Entrée/Sortie connectable par un bus de liaison de données et d'adresses, à une unité centrale d'un automate programmable, ce dispositif comprenant une gamme de cartes d'Entrée/Sortie portant chacune un code d'identification spécifique accessible en lecture par l'unité centrale, ainsi que des moyens de multiplexage permettant à l'unité centrale de dialoguer avec lesdites cartes, chaque carte comportant:

- des bornes d'Entrée/Sortie destinées à être reliées au bus,
- des bornes d'entrée destinées à être reliées à des capteurs,
- des bornes de sortie destinées à être connectées à des actionneurs, et
- une pluralité de circuits électroniques reliant lesdites bornes d'Entrée/Sortie respectivement aux bornes d'entrée et aux bornes de sortie, ces circuits électroniques constituant des interfaces logiques entre, d'une part, le bus de liaison avec l'unité centrale et, d'autre part, les capteurs et les actionneurs.

2

Selon l'invention, ce dispositif est plus particulièrement caractérisé en ce que:

a) au moins l'un des susdits circuits électroniques constituant un interface logique entre le bus et un capteur comprend:

. un premier dispositif de transmission avec découplage galvanique entre son entrée et sa sortie, ce premier dispositif étant apte à recevoir les signaux d'entrée appliqués sur ses entrées et à transmettre auxdites bornes d'Entrée/Sortie un premier signal logique correspondant,

. un second dispositif de transmission avec découplage galvanique entre son entrée et sa sortie, ce second dispositif étant apte à engendrer à partir desdits signaux d'entrée, un premier signal logique de référence, et

. un premier circuit de détection de non concordances connecté aux sorties du premier et du second dispositifs de transmission pour détecter les non concordances entre le premier signal logique et le premier signal logique de référence:

b) au moins un des circuits électroniques constituant un interface logique entre le bus et un actionneur comprend:

. un troisième dispositif de transmission avec découplage galvanique entre son entrée et sa sortie, ce troisième dispositif étant apte à recevoir les signaux de commande destinés à cet actionneur, qui sont appliqués par le bus aux susdites bornes d'Entrée/Sortie, et à transmettre aux bornes de sortie raccordées à cet actionneur un second signal logique correspondant,

. un quatrième dispositif de transmission avec découplage galvanique entre son entrée et sa sortie, ce quatrième dispositif étant apte à recevoir les signaux de commande appliqués auxdites bornes de sortie et à engendrer un second signal logique de référence; et

. un second circuit de détection de non concordances connecté aux sorties des troisième et quatrième dispositifs de transmission pour détecter les non concordances entre le second signal logique et le second signal logique de référence et

c) l'échange de signaux entre l'unité centrale et ladite carte comporte les phases suivantes:

. une phase dans laquelle la carte adressée par l'unité centrale transmet à celle-ci un signal indicatif de l'absence de défaut de non concordance,

. une phase d'achèvement de l'échange par l'unité centrale suite à la réception dudit signal, et

. une phase au cours de laquelle l'unité centrale est avertie d'une anomalie locale lorsque la carte adressée par l'unité centrale ne renvoie pas ledit signal d'absence de défaut de non concordance.

Selon une autre caractéristique de l'invention, dans le cas ou il fait intervenir un bornier du type de celui précédemment décrit, le dispositif peut avantageusement comporter des moyens pour la détection du mouvement initial avant déconnexion et du mouvement final, après reconnexion dudit bornier sur la carte d'Entrée/Sortie correspondante.

Dans ce cas ces moyens de détection peuvent être associés à des circuits permettant d'effectuer le codage du signal de déconnexion du bornier.

Par ailleurs, le dispositif peut être conçu de manière à ce que le susdit signal de mouvement initial avant déconnexion du bornier provoque, avant l'ouverture des circuits de sortie, la remise à zéro de toutes les sorties de la carte d'Entrée/Sortie correspondante.

Il peut en outre comprendre un circuit regroupant les signaux de non concordance et de mouvement initial de déconnexion ou de connexion complète du bornier.

L'invention concerne en outre un procédé d'échange de signaux entre l'unité centrale et des circuits d'Entrée/Sortie précédemment décrits, ce procédé comprenant au moins les phases suivantes:

- Une phase dans laquelle s'effectue le renvoi à l'unité centrale d'un signal indicatif de l'absence de défaut de non concordance, et éventuellement de la bonne connexion du bornier extérieur lors de l'adressage de chaque carte d'Entrée/Sortie,

- Une phase dans laquelle s'effectue l'achèvement de l'échange par l'unité centrale, suite à la réception de ce signal,

- Une phase au cours de laquelle l'unité centrale est avertie d'une anomalie locale lorsqu'une carte d'Entrée/Sortie adressée par l'unité centrale ne renvoie pas ledit signal indicatif d'absence de défaut de non concordance et une bonne connexion du bornier.

Des modes de réalisation de l'invention seront décrits ci-après, à titre d'exemples non limitatifs, avec référence aux dessins annexés dans lesquels:

La figure 1    est une représentation schématique, en perspective, avec écorché partiel, d'un bac d'automate équipé d'un bornier;

La figure 2    est une coupe schématique partielle permettant d'illustrer le montage du bornier dans un bac tel que celui représenté à la figure 1;

La figure 3    est un schéma de principe d'un circuit d'entrée assurant la transmission des informations entre l'unité centrale de l'automate et les capteurs ou les détecteurs du processus commandé;

La figure 4    est un schéma de principe d'un circuit d'Entrée/Sortie tripolaire assurant la transmission des informations entre l'unité centrale de l'automate et les actionneurs du processus commandé;

La figure 5    est un schéma de principe d'un circuit d'Entrée/Sortie bipolaire dont l'élément de sortie, destiné à assurer la commande des actionneurs de processus consiste en un relais;

La figure 6    est le schéma d'une variante d'exécution de l'étage de sortie du circuit d'Entrée/Sortie représenté à la figure 5.

EP 0 144 372 B1

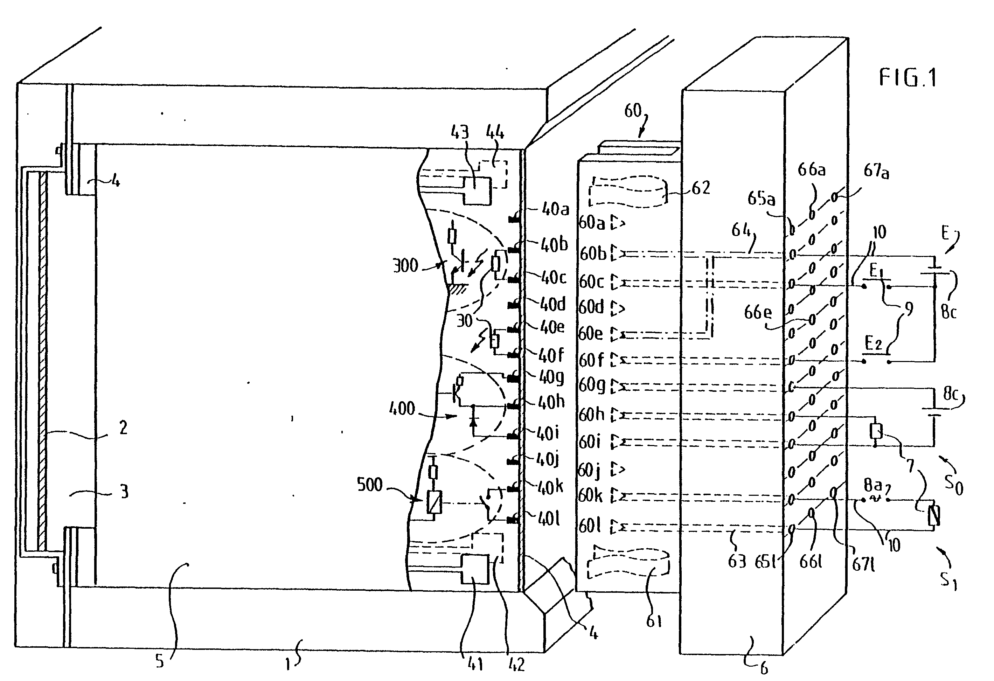

La figure 1 représente un bac d'automate 1 portant dans son fond un circuit imprimé 2 disposé parallèlement au fond du bac. Le circuit imprimé 2 matérialise un bus de données et d'adresses, ainsi que les lignes de transmission et de signaux de contrôle indiqués dans la suite. Le bus a pour rôle d'assurer la transmission des signaux entre une unité centrale (non représentée) et des cartes d'entrée et/ou des cartes de sortie. Le circuit imprimé 2 qui supporte le bus est branché par un connecteur 3 à la face arrière d'une carte électronique d'entrée ou de sortie 4, montée dans un boîtier de protection 5.

Le connecteur 3 est un connecteur femelle à pince qui peut recevoir les plages de connexion du circuit imprimé constituant la carte d'entrée ou de sortie orientées vers le fond du bac.

Un écorché partiel du boîtier 5 enveloppant la carte électronique 4 permet de voir les plages de connexion de la face avant du circuit imprimé 4, ainsi qu'une partie des circuits électroniques qui peuvent être montés sur le circuit imprimé pour constituer, soit une carte d'entrée à deux pôles 300, soit une carte de sortie bipolaire 500, soit une carte de sortie tripolaire 400.

Pour des raisons de commodité, on a représenté les trois possibilités de configuration des circuits sur le même support 4; en réalité, pour une carte d'entrée à huit voies continues ou alternatives, le circuit imprimé 4 comportera huit circuits 300. De même, pour une carte de sorties alternatives bipolaires à douze voies, il y aura douze circuits 500 aboutissant chacun à un couple de connexion 40. Enfin, pour une carte de sorties continues 400 nécessitant trois pôles, la carte comprendra autant de fois trois plages qu'il y aura de voies. Chaque circuit du type 300, 400, 500 aboutit à au moins une paire de plages de connexion que l'on a désignées par les références $40_a$ à $40_l$ et qui se trouve sur une face du circuit imprimé. D'autre part, de chaque côté du circuit imprimé, on a placé en haut et en bas des plages conductrices (43, 44 et, respectivement 41, 42) qui se trouvent reliées avec le bus par l'intermédiaire, soit du circuit 300, soit du circuit 400, soit du circuit 500.

Comme on l'expliquera dans la suite, la partie avant 60 d'un bornier 6 vient se brancher sur la carte, par introduction de ladite partie avant dans une ouverture non représentée du boîtier 5.

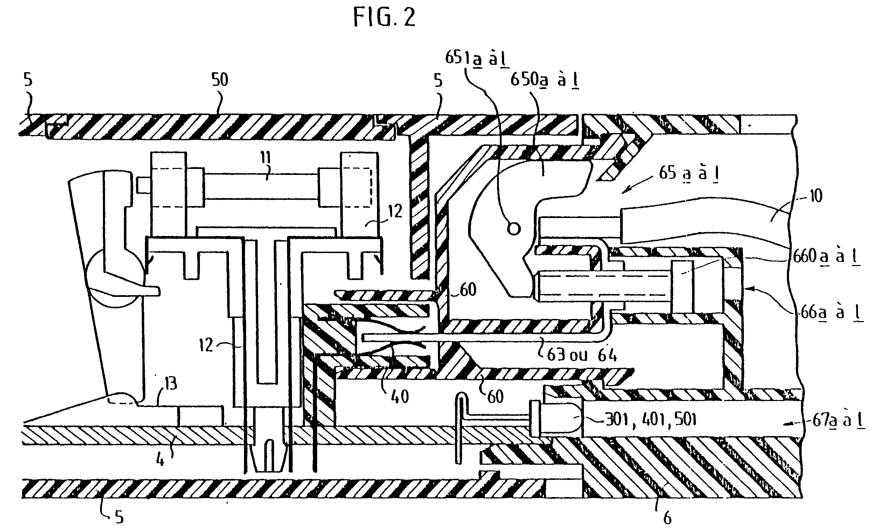

La partie avant du bornier comporte une succession ($60_a$ à $60_l$) de moyens de connexion aptes à établir le contact électrique avec les plages conductrices respectives $40_a$ à $40_l$ du circuit imprimé 4. Ces moyens peuvent être un connecteur femelle à pince recevant le bord avant du circuit imprimé portant les plages de contact $40_a$ à $40_l$. On peut également remplacer les plages de contact $40_a$ $40_l$ par un connecteur femelle 40 qui accueille des lames de contact 63 ou 64, comme on l'a représenté à la figure 2, ou toute autre disposition possible de connecteur.

De plus, de part et d'autre des moyens de connexion $60_a$ à $60_l$, on a disposé, en haut et en bas respectivement, une lyre de contact 62, 61. Ces lyres 61, 62 établissent une liaison électrique, entre les plages 41, 42 pour la lyre basse 61, entre les plages 43, 44 pour la lyre haute 62, lorsque le bornier 6 est branché sur la carte.

Les positions des lyres 61, 62 et des plages de contact 41, 42; 43, 44) sont agencées de façon que l'une des liaisons électriques entre les plages 41, 42 et 43, 44 soit ouverte avant que les moyens de connexion $60_a$ à $60_l$ soient débranchés des plages $40_a$ à $40_l$. En sens inverse, les moyens de connexion $60_a$ à $60_l$ seront reliés aux plages $40_a$ à $40_l$ avant que les lyres 61, 62 établissent les liaisons électriques entre les plages 41, 42, respectivement 43, 44, lorsque l'on branche le bornier 6 sur le circuit imprimé 4.

Cette disposition présente l'avantage de permettre de détecter une action d'extraction sur le bornier et, par suite, de mettre à zéro les sorties ou d'inhiber les entrées des informations de la carte dont on manipule le bornier en vue de le déconnecter. D'autre part, lorsque le bornier est branché, comme on l'expliquera dans la suite, l'unité centrale en est informée et peut alimenter les sorties de la carte, ou valider les entrées ainsi connectées.

Les moyens de connexion $60_a$ à $60_l$ sont reliés, par des liaisons électriques directes 63 ou à shunt 64, à des bornes de connexion extérieures $65_a$ à $65_l$.

Ainsi, comme on peut le voir sur la figure 1, selon la configuration du bornier 6, certaines liaisons entre bornes homologues $60_a$, $65_a$ n'existent pas, alors que les bornes homologues $60_a$, $65_a$ sont reliées directement.

Pour de plus amples détails sur un exemple de constitution du bornier, on peut se référer à la demande de brevet européen 84 400 680 deposée le 15 Avril 1983 sous le numéro 8 306 175 précité au nom de LA TELEMECANIQUE ELECTRIQUE, pour: "Bornier à shunts", n° de publication européenne EP-A-123 595.

Les bornes externes $65_b$, $65_c$, $65_f$ sont reliées par des fils conducteurs 10 à un ensemble 9 de capteurs d'entrée constitué par exemple par des interrupteurs de fin de course. Ces capteurs sont alimentés par une source de tension continue $8_c$ pour constituer un circuit d'entrée continue E à logique positive, représenté à la figure 1.

La borne externe $65_g$ est reliée, par un fil conducteur 10, à la borne positive d'une source de tension continue $8_c$, dont la borne négative est branchée à la borne $65_l$. Un actionneur 7 est relié, d'une part à la borne $65_h$ et, d'autre part, à la borne $65_i$, de façon à constituer un circuit de sortie continue à logique positive $S_o$. La borne externe $65_k$ est reliée par un fil conducteur 10 à une borne d'une source de tension alternative, dont l'autre borne est reliée à une charge 7, constituée par exemple par un electro-aimant, dont l'autre borne est reliée à la borne extérieure $65_l$. Ce circuit constitue un circuit de sortie alternative $S_l$.

On déduira facilement de l'exposé précédent la configuration d'un circuit d'entrée continue à logique négative et d'un circuit de sortie continue à logique négative, en inversant les branchements des sources continues. A côté de chaque borne externe $65_a$, $65_l$ se trouve un orifice $66_a$ à $66_l$ et un guide de lumière $67_a$ à $67_l$. Ces éléments de chaque ensemble: borne, orifice et guide de lumière sont disposés dans un même plan

4

horizontal.

Sur la figure 2, on voit que les orifices $66_a$ à $66_l$ permettent l'accès à une vis de serrage $660_a$ à $660_l$ qui fait pivoter, autour de leurs axes $651_a$ à $651_l$, des cames $650_a$ à $650_l$, qui viennent immobiliser les parties dénudées des fils conducteurs 10 contre les surfaces conductrices des liaisons électriques 63 ou 64 reliant le fil conducteur à un connecteur femelle 40 qui établit les liaisons avec les différents circuits électroniques supportés par la carte 4.

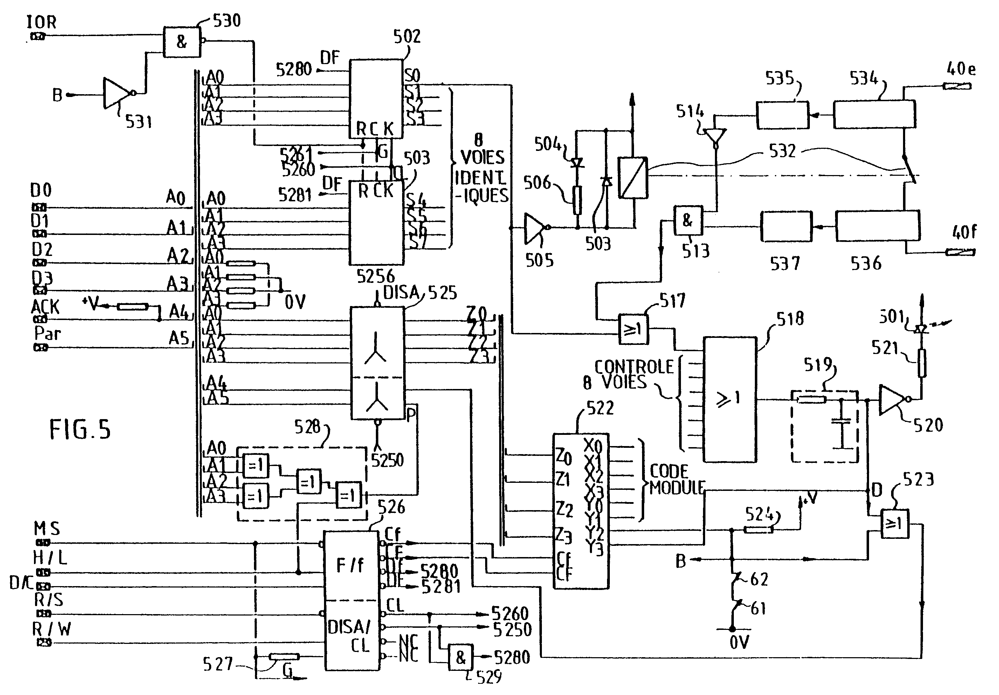

Des diodes électroluminescentes d'indication de défaut 301, 401, 501, spécifiques ou communes à plusieurs voies, sont disposées en face de certains des guides de lumière $67_a$ à $67_l$, et reliées électriquement à l'un des circuits 300, 400 ou 500 selon le type de carte utilisé. Des fusibles à percuteurs 11 peuvent également être montés sur la carte pour réaliser des détections de fusion, avec visualisation et signal de défaut, comme on l'expliquera dans la suite en se référant à la figure 5.

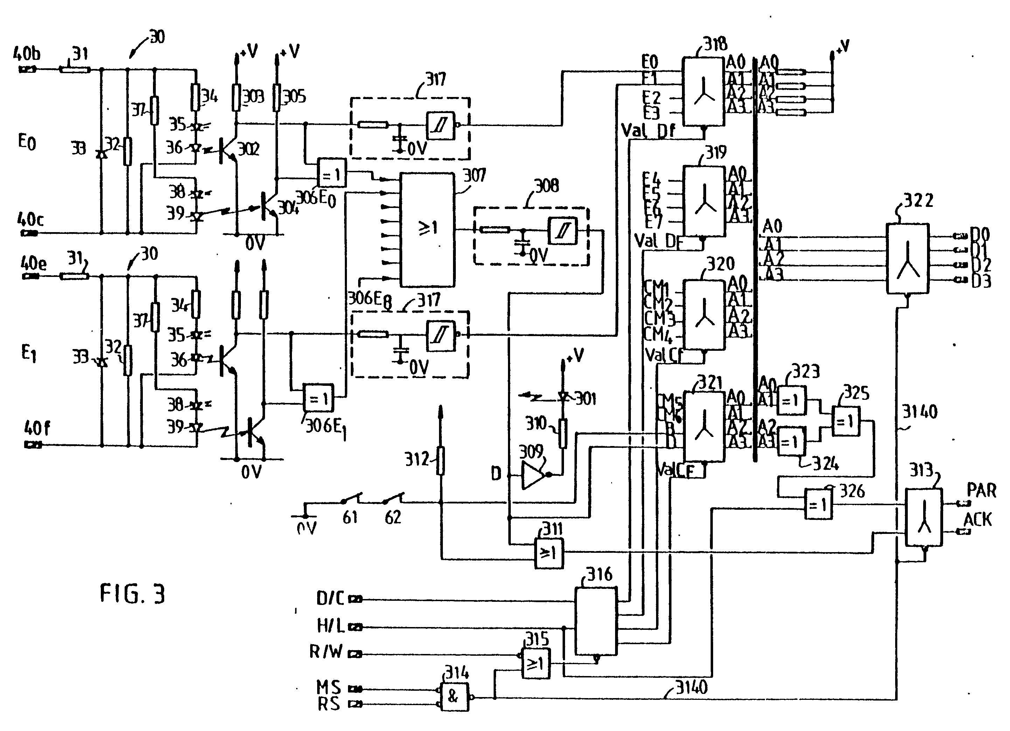

La figure 3 représente le circuit électronique de transmission d'information et de signalisation de défaut d'une carte dite d'entrée, utilisable avec des circuits externes du type représenté par la référence E sur la figure 1.

Sur la figure 1, on a représenté un circuit d'entrée E à deux voies, c'est-à-dire utilisant deux capteurs ce circuit est associé, dans l'exemple considéré, avec un bornier à shunt interne. Il est bien évident, et cela ressort à la lecture de la demande de brevet citée ci-dessus, que le bornier pourrait aussi bien être à liaison directe, à shunt interne, à shunt externe, ou présenter une combinaison des trois possibilités énumérées ci-dessus.

Dans tous les cas, quel que soit le type de bornier utilisé, cela ne modifie pas le câblage 300 de la carte 4. Le choix du type de bornier modifie seulement le câblage du circuit externe d'enrée E.

Sur la figure 3, on a représenté deux voies d'entrée 30 découplées galvaniquement, par des optocoupleurs, des circuits 300 reliés au bus de l'automate matérialisé par le circuit 2.

La plage de contact 40b est reliée par deux résistances 31, 32 en série à la plage de contact 40c. La cathode d'une diode Zener de protection 33 est reliée au point commun des deux résistances 31, 32 tandis que l'anode est reliée à la borne 40c.

Un premier circuit, en parallèle sur ladite résistance 32, comporte en série une résistance 34, une diode électroluminescente de visualisation d'état du circuit d'entrée 35 et une diode émettrice infrarouge 36 associée en optocoupleur avec le phototransistor 302.

Un second circuit en parallèle sur ladite résistance 32 comporte en série une résistance 37, une diode d'équilibrage de seuils 38 et une diode émettrice infrarouge 39 associée en optocoupleur avec le phototransistor 309. Entre les plages de contact 40c et 40b se trouve une entrée $E_2$ identique à l'entrée $E_0$ décrite ci-dessus.

La diode de visualisation d'état 35 de la première voie est disposée sur la carte de façon à se trouver en face du guide de lumière 67c lorsque le bornier est en place, tandis que la diode correspondante de la deuxième voie 35 est alors disposée en face du guide 67f.

Ainsi, l'état de fonctionnement de chaque circuit d'entrée E est visualisé par la diode électroluminescente 35 correspondante. On procède de la même façon pour les autres voies dans le cas d'une carte à voies multiples. La description qui suit sera limitée à une seule voie.

Lorsque l'entrée $E_0$ reçoit, par l'intermédiaire d'un capteur à l'état passant, le signal de tension garantissant son passage à l'état logique "I", la diode émettrice infrarouge 36 éclaire et sature le phototransistor 302 dont l'émetteur est relié à la masse et dont le collecteur est chargé par une résistance 303 elle-même reliée à une source de tension positive; simultanément, du fait du même signal de tension appliqué à $E_0$, la diode émettrice infrarouge 39 éclaire et sature le phototransistor 304, dont l'émetteur est relié à la masse et dont le collecteur est chargé par une résistance 305 reliée à ladite source de tension positive.

Les collecteurs des phototransistors 304 et 305 sont reliés aux deux entrées de la fonction "OU EXCLUSIF" du circuit 306.

En fonctionnement normal, ce circuit d'entrée 30 sature ou bloque simultanément les deux phototransistors 304 et 305 selon que le capteur externe correspondant est fermé ou ouvert; la simultanéité de ces commutations assure la permanence de l'identité des signaux appliqués au "OU EXCLUSIF" 306 dont la sortie reste alors à zéro.

Par contre, en cas de défaut, sur l'une des deux branches parallèles, par exemple sur la branche 34, 35, 36, 302, dont le phototransistor reste bloqué malgré l'application de la tension requise à l'entrée $E_1$, les signaux reçus par le "OU EXCLUSIF" 306 diffèrent, ce qui permet d'obtenir un signal de défaut. Si, au contraire, un défaut provoque la conduction permanente du phototransistor 302, en l'absence de signal aux bornes de l'entrée 30 concernée et, par conséquent, en l'absence de courant dans la branche parallèle 37, 38, 39, 304, la non concordance d'état des deux phototransistors 302, 304 est détectée par le "OU EXCLUSIF" 306, qui engendre alors un signal de défaut.

Dans les deux exemples ci-dessus, il a été montré qu'un défaut de la branche 34, 35, 36, 302 est détecté s'il provoque une non concordance entre l'état logique présent aux bornes de l'entrée 30 et l'état logique appliqué, via l'optocoupleur 302, aux circuits de communication avec l'unité centrale par le bus d'Entrée/Sortie. Lorsque des défauts comparables surviennent dans la branche parallèle 37, 38, 39, 304, ils provoquent une non concordance entre d'une part, l'état logique destiné à l'unité centrale et présent sur le collecteur de l'optocoupleur 302 et, d'autre part, l'état logique destiné au "OU EXCLUSIF" de contrôle 306 et présent sur le collecteur de l'optocoupleur 304. Cette non concordance engendre aussi un signal de défaut à la sortie du circuit 306.

En récapitulant les différents exemples ci-dessus, on constate qu'en fonctionnement normal le signal présent sur le collecteur du phototransistor 304 sert à valider le signal présent sur le collecteur du phototransistor 302 et destiné à l'unité centrale par contre en cas de dégradation de l'interface d'entrée de signal constituée par la branche 34, 35, 36, 302 ou de l'interface de contrôle constituée par la branche 37, 38, 39, 304 le "OU EXCLUSIF" engendre un signal de défaut qui signifie, soit que l'information logique disponible pour l'unité centrale est erronée, soit que le circuit d'entrée 30, 300 correspondant n'est plus en mesure de confirmer que le signal logique disponible pour l'unité centrale est identique à celui appliqué à l'entrée.

Pour simplifier la carte d'entrée représentée à la figure 3 et limiter le coût supplémentaire lié à cette détection de défauts, les différents "OU EXCLUSIF" 306 des interfaces d'entrée qu'elle regroupe sont tous reliés à un circuit "OU" commun 307 qui centralise ainsi les signaux de défauts possibles d'une même carte. Bien entendu, une variante possible de ce circuit d'entrée à auto-surveillance incorporée consisterait à reporter la vérification de concordance du signal destiné à l'unité centrale et de son signal de contrôle aussi loin que possible vers le bus d'Entrée/Sortie; cependant de telles variantes conduiraient à des cartes plus complexes et plus coûteuses, sans apporter une amélioration substantielle, en termes de sécurité de fonctionnement de l'automatisme contrôlé par de telles entrées. En effet, l'expérience acquise sur la fiabilité des différents composants mis en oeuvre dans ces circuits d'entrée fait apparaître que les dégradations des optocoupleurs occasionnent la grande majorité des défauts conduisant à une non concordance entre le signal aux bornes d'entrée et le signal destiné à l'unité centrale: c'est pourquoi on a limité la redondance concernant chaque entrée aux circuits de commande et de détection d'état à deux optocoupleurs se surveillant mutuellement 34, 35, 36, 302 et 37, 38, 39, 304.

Pour éviter les alarmes transitoires intempestives que des écarts de temps de commutation des deux branches logiques reliées à chaque "OU EXCLUSIF" pourraient provoquer, la sortie du "OU" 307 est filtrée par le circuit 308, qui comporte un intégrateur suivi d'un trigger, et ne transmet un "I" logique à la ligne D qu'en cas de non concordance significative.

D'une part, ce "I" logique est exploité localement sur la carte pour visualiser la présence d'un défaut en excitant la diode électroluminescente 301 par l'intermédiaire de l'amplificateur 309 et de la résistance 310; d'autre part, cette ligne D est aussi raccordée à l'une des deux entrées d'un autre circuit "OU" 311, dont le signal de sortie est transmis à la borne ACK de raccordement au bus lorsque l'interface 313 est validée.

L'autre entrée de ce circuit "OU" 311 reçoit la ligne B, qui est reliée à une source de tension V par la résistance 312 et mise au zéro volt par l'intermédiaire des contacts 61 et 62. Ces contacts 61 et 62 symbolisent les liaisons électriques réalisées entre les plages 41, 42 d'une part et 43, 44 d'autre part, grâce aux lyres 61, 62 de la figure 1.

Le bornier 6 en place sur la carte 4 maintient la ligne B au zéro volt par les lyres 61, 62: au cours de la déconnexion de ce bornier de ladite carte et avant l'ouverture des liaisons 40 - 60, au moins l'une des lyres 61, 62 assure la mise à zéro de la ligne B, sur laquelle apparaît un signal logique "I" transmis par le "OU" 311 et présent sur la borne ACK de raccordement au bus lorsque le circuit d'interface 313 est validé.

En considérant les conditions de commutation ainsi décrites pour les lignes D et B, on voit que le signal apparaissant sur la borne ACK, lorsque l'interface 313 est validée, est un "zéro" logique lorsque le bornier 6 est en place et qu'aucune non concordance n'est détectée sur les différentes voies d'entrée de la carte; par contre, un début de déconnexion bornier ou une non concordance quelconque fera apparaître un signal "I" sur ladite borne ACK lorsque ladite interface 313 sera validée: ce signal ACK est donc exploitable par l'unité centrale pour ne prendre en compte que les informations d'entrées issues de cartes sans défaut de non concordance et dont le bornier de connexion extérieur est en place. Les lignes B et D précitées sont encore reliées à deux entrées de même nom du circuit d'interface 321 pour permettre à l'unité centrale d'identifier un défaut en lisant chacun des signaux B et D.

Après cette description détaillée de l'élaboration et du traitement local des signaux "défaut de concordance" (D) et "déconnexion bornier" (B), la suite des fonctions d'interface d'entrée représentée à la figure 3 va maintenant être exposée. Il a déjà été montré comment l'application d'un signal de tension représentant le niveau logique "I" aux bornes 40b, 40c de l'entrée $E_0$ sature le phototransistor 302 et fait alors apparaître un "ZERO" logique entre son collecteur et le zéro volt.

Pour éliminer les perturbations brèves, telles que celles provoquées par les rebondissements de contacts de capteurs et certaines oscillations engendrées par les circuits logiques soumis à des signaux d'entrée trop lents, le signal logique du collecteur du phototransistor 302 est filtré et mis en forme par un trigger inverseur dans le circuit 317.

Le "I" logique qui résulte de ce traitement est appliqué à l'entrée $E_0$ de l'interface 318, qui reçoit aussi les signaux logiques $E_1$, $E_2$, et $E_3$ après mise en forme par des circuits identiques.

De même, le circuit d'interface 319 reçoit, après mise en forme, les signaux logique $E_4$, $E_5$, $E_6$ et $E_7$.

Les interfaces 320 et 321 reçoivent encore six niveaux logiques fixes CM1 à CM6 constituant un code spécifique à chaque type de carte d'entrée ou de sortie, signaux que l'unité centrale peut lire pour identifier ou vérifier la configuration d'Entrée/Sortie présente sur le bus; après cette description de l'élaboration des quatre mots de quatre bits ($E_0$ $E_1$ $E_2$ $E_3$ / $E_4$ $E_5$ $E_6$ $E_7$ / $CM_1$, $CM_2$, $CM_3$, $CM_4$ / $CM_5$, $CM_6$, B, D) respectivement disponibles à l'entrée des circuits d'interface 318, 319, 320, 321, on expliquera le fonctionnement des circuits de la figure 3 pendant son interrogation par l'unité centrale. Pour lire l'état des entrées, $E_0$ à $E_7$, ou le mot d'état de la carte constitué des codes module CM1 à CM6 et des signaux "B" et "D", l'unité centrale commence par sélectionner l'adresse de la carte d'entrée concernée en mettant à zéro les signaux du bus RS et MS appliqués

6

aux deux entrées inverseuses du circuit "NON ET" 314 qui engendre un zéro logique que reçoit l'entrée directe du circuit "OU" 315 pendant que son entrée inverseuse est mise à 1 par le signal R/W venant de l'unité centrale ce circuit 315 engendre un "O" pour valider le circuit décodeur 316, que l'unité centrale utilise par le biais des signaux combinés D/C et H/L pour sélectionner individuellement chaque mot de quatre bits $E_0$ à $E_3$, $E_4$ à $E_7$, $CM_1$ à $CM_4$, $CM_5$ à D) à communiquer au bus $D_0$ à $D_3$ par l'intermédiaire de son interface propre 318, 319, 320 ou 321 et de l'interface commune 322.

La table de vérité de ce circuit de sélection 316 est la suivante:

| MS et RS à zéro R/W à 1 | D/C | H/L | Signal de Validation (actif à zéro) |
|---|---|---|---|
| Lecture données poids faibles $E_0$ à $E_3$ | 0 | 0 | Val Df = 0 |
| Lecture données poids forts $E_4$ à $E_7$ | 0 | 1 | Val $D_F$ = o |
| Lecture codes Module poids faibles $CM_1$ à $CM_4$ | 1 | 0 | Val $C_f$ = 0 |
| Lecture codes Module poids forts $CM_5$ à D | 1 | 1 | Val $C_F$ = 0 |

On va maintenant examiner en détail la lecture des entrées $E_0$ à $E_3$: la validation de l'interface 318 décrite précédemment applique ce mot de quatre bits à la fois à l'entrée du circuit d'interface bus 322 et au dispositif de calcul de parité constitué par les "OU EXCLUSIF" 323, 324, 325; le "OU EXCLUSIF" 326 calcule la parité de cinq signaux binaires: le signal H/L associé aux quatre bits du mot présenté sur le bus par la validation de l'interface 322. Lorsque les signaux MS et RS sélectionnent cette carte, on a expliqué précédemment que la sortie du circuit 314 passe à zéro; la ligne 3140 transmet ce zéro aux interfaces 313 et 322 et les valide.

L'unité centrale lit alors, simultanément, le mot de quatre bits $E_0$ à $E_3$ sur les lignes $D_0$ à $p_3$, la parité calculée à la source "PAR": et le signal ACK qui est à zéro lorsque le bornier est en place et qu'aucun défaut n'est détecté sur cette carte d'entrée.

A la réception, l'unité centrale calcule la parité du mot constitué par les quatre bits $D_0$ à $D_3$ présents sur le bus avec le signal H/L qu'elle applique audit bus et compare cette parité calculée à l'arrivée à celle transmise par la ligne "PAR" elle mémorise ce mot $D_0$ à $D_3$ en mémoire image d'Entrée/Sortie uniquement si les parités coïncident et si le signal ACK = 0; dans les autres cas l'unité centrale est avertie, en temps réel, d'une anomalie et procède comme suit:

Si ACK = 0 et si elle constate une divergence de parité, elle conserve les données mises en mémoire image d'Entrée/Sortie à la dernière lecture qu'elle a validée et, selon l'option choisie en programmation système par le concepteur, procède immédiatement, ou au cycle suivant, à une autre lecture de ces même données; si ACK reste à "I" pendant cette lecture et si le contrôle de parité constate une coïncidence, l'unité centrale est avertie par ce signal ACK du fait que les données présentes sur le bus sont douteuses; par programme le concepteur de l'automatisme choisira une procédure d'arrêt rapide ou de maintien en fonctionnement dégradé avec signalisation de défaut selon l'adresse de la carte concernée, c'est-à-dire, selon l'impact d'éventuelles informations fausses en provenance des entrées correspondantes sur la bonne marche et la sécurité du cycle de l'automatisme contrôlé.

L'unité centrale procède de même pour lire les entrées $E_4$ à $E_7$ et, si nécessaire, les différents codes modules en sélectionnant le mot voulu par la combinaison H/L, D/C correspondante indiquée par la table de vérité du décodeur 316; chacune de ces lectures donne lieu aux mêmes contrôles de validation, grâce aux signaux PAR et ACK émis avec le mot sélectionné.

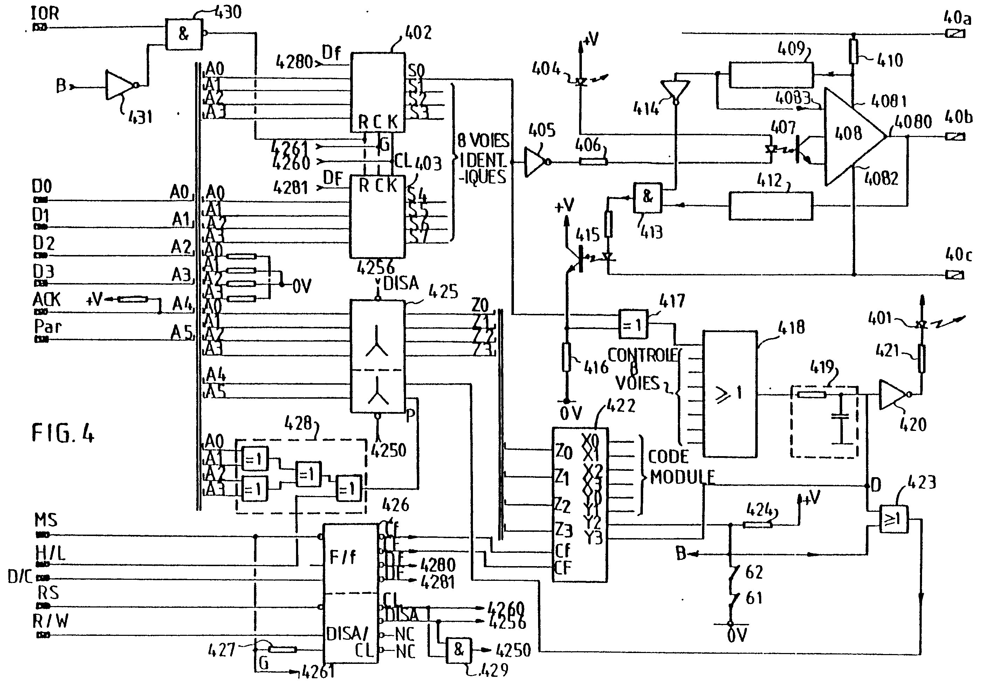

En résumé, la procédure et les dispositifs ainsi décrits permettent à un automate programmable relié à des cartes d'entrées du type représenté à la figure 3 de disposer, en permanence, de signaux accessibles en lecture et représentant l'état de fonctionnement D et la présence du bornier de connexion externe et de vérifier, avant validation de chaque mot d'entrée, le bon état de fonctionnement de la carte interrogée et la conformité des parités entre mots émis et reçus. Des raisons économiques peuvent donner lieu à une version partielle de la solution représentée à la figure 4, version ne comportant ni la redondance d'entrée 37, 38, 39, 304, ni le contrôle de concordance 306, ni son exploitation 308, 309, 310, 301; avec le schéma ainsi simplifié, le signal "ACK" n'est conditionné que par le signal B, connexion bornier.

La figure 4 donne le schéma d'une carte de sortie à huit voies en courant continu du type "à trois fils", c'est-à-dire, comportant, pour chaque sortie telle que $S_0$, une plage d'alimentation $40_a$ (+V externe), une plage de sortie vers la charge 40b et une troisième plage 40c reliant l'autre pôle de l'amplificateur 408 au zéro volt de l'alimentation externe.

Côté bus, cette carte comporte des raccordements nécessaires aux mêmes signaux que la carte d'entrée de la figure 3, mais son fonctionnement diffère contrairement aux entrées, qui ne fonctionnent qu'en lecture, les cartes de sortie du modèle représenté à la figure 4 sont accessibles en écriture pour commander l'état de chaque sortie et en lecture pour acquérir ou vérifier le code module et les informations B et D (présence bornier, absence défaut) définis précédemment.

La sélection des différents modes de fonctionnement de cette carte s'effectue à partir des signaux:

MS    Sélection module
RS    Sélection rack
R/W   Lecture/écriture
D/C   Données/code
H/L   Poids forts/poids faibles

Ces signaux sont explicités par le circuit décodeur 426 selon la table de vérité suivante:

| MS et RS à zéro | R/W | D/C | H/L | Signal et conditions de validation d'ecriture |
|---|---|---|---|---|
| Sélection données poids faibles $D_0$ à $D_3$ | 0 | 0 | 0 | $CL = 0$<br>$D_f = 0,$<br>écriture dans $S_0$ à $S_3$ si RS remonte avant MS |
| Sélection données poids forts $D_4$ à $D_7$ | 0 | 0 | 1 | $CL = 0$<br>$DF = 0,$<br>écriture dans $S_4$ à $S_7$ si RS remonte avant MS |
| Lecture codes poids faibles | 1 | 1 | 0 | $DISA = 0$<br>$C_f = 0$ |
| Lecture codes poids forts | 1 | 1 | 1 | $DISA = 0$<br>$C_F = 0$ |

En échange d'écriture poids faibles, l'unité centrale présente sur les fils du bus $D_0$ à $D_3$ les signaux destinés à la commande des sorties à $S_0$ $S_3$ et sélectionne la carte, les sorties concernées et le mode écriture en faisant RS et MS = 0, H/L et D/C = 0, R/W = 0.

Lorsque ces signaux apparaissent sur les plages correspondantes de la carte de la figure 4, les quatre "OU EXCLUSIF" du circuit 428 calculent la parité reçue des signaux $D_0$ à $D_3$ combinés avec H/L recevant le signal CL = 0 du décodeur 426, le circuit ET 429 engendre, sur sa sortie 4250, un signal zéro qui valide les voies $A_4$ et $A_5$ de l'interface 425: la carte sélectionnée renvoie alors à l'unité centrale, par $A_5$ la parité calculée sur les signaux reçus et par $A_4$ le signal ACK issu du circuit "OU" 423, signal à zéro lorsque le bornier est en place et en l'absence de défaut détecté sur la carte.

Recevant en retour cette parité des signaux présents sur les entrées des registres de mémorisation d'état des sorties 402, 403, l'unité centrale la compare à la parité qu'elle a elle-même calculée à la source: si ces parités coïncident et si le signal ACK est à zéro, l'unité centrale valide cet échange d'écriture en mémorisant les signaux $D_0$ à $D_3$ dans les bascules $S_0$ à $S_3$ du circuit 402.

Pour valider cette mémorisation, l'unité centrale fait remonter le signal RS avant le signal MS, ce qui fait remonter le signal CL appliqué par la ligne 4260 du circuit 402 pendant que le signal G (= MS) reçu sur la ligne 4261 par ce même circuit est encore à zéro; cet ordre de remontée des signaux G et CL appliqués au circuit 402 mémorise les données présentes sur les lignes $D_0$ à $D_3$ dans les bascules $S_0$ à $S_3$, à la place des données reçues précédemment. Au contraire, en cas d'erreur de parité constatée par l'unité centrale, celle-ci inhibe les données présentes aux entrées du registre 402 en faisant remonter le signal MS (= G) avant RS donc avant L; cette séquence permet à l'automate de conserver les sorties $S_0$ à $S_3$ dans l'état correspondant aux ordres reçus lors du dernier échange validé pour ne les mettre à jour qu'avec les données dont la bonne transmission a été constatée, en temps réel, par l'unité centrale.

Avant de considérer les cas dans lesquels la carte de la figure 4 sélectionnée par MS et RS présente une ou plusieurs anomalies l'empêchant de renvoyer à l'unité centrale le signal ACK = 0, on terminera la description complète du circuit de sortie relié à la connexion $S_0$ du registre 402. Lorsque $S_0$ est au niveau 1, l'inverseur 405 alimente le circuit série partant de + V et comportant la diode électroluminescente 404, la diode émettrice infrarouge de l'optocoupleur 407 et la résistance 406; le signal de commande $S_0$ mémorisé localement par le registre 402 est donc visualisé par la diode 404 via le guide de lumière 67b du bornier et transmis à l'amplificateur de sortie 408 par l'optocoupleur 407.

Cette amplificateur 408 est raccordé à une alimentation continue externe par l'intermédiaire des plages 40a (+) et 40c et il relie la plage 40b, via la résistance 410, à la plage 40a lorsque l'optocoupleur 407 est conducteur.

En fonctionnement normal, lorsque $S_0$ = 1, la charge raccordée entre les plages 40b et 40c reçoit une tension très voisine de celle de l'alimentation externe (le capteur de courant 410 étant une résistance de faible valeur); le detecteur de surintensité 409 engendre alors un zéro transformé en 1 par l'inverseur 414, tandis que le contrôle de tension 412 associe un signal 1 à la présence de tension entre 40b et 40c; le circuit ET 413 engendre donc un signal 1 qui excite l'optocoupleur 415, par l'intermédiaire de la résistance 4150 en série avec sa diode émettrice infrarouge; son phototransistor alimente alors la résistance 416 en charge dans son émetteur, ce qui engendre un 1 sur l'une des entrées du "OU EXCLUSIF" 417, dont l'autre entrée reçoit directement le signal $S_0$; la concordance de la commande $S_0$ = 1 et de l'exécution de cette commande par l'amplificateur 408 engendre donc deux "1" aux entrées du circuit 417, dont la sortie reste à zéro. De même, lorsque l'état mémorisé par le registre 402 $S_0$; est = 0, l'optocoupleur 407 et l'amplificateur 408 restent bloqués; ce même "OU" exclusif 417 constate alors la concordance entre commande et exécution et sa sortie reste encore à zéro. Par contre, lorsqu'une anomalie de charge provoque une surintensité détectée par le circuit 409, ce circuit engendre un 1 qui fait intervenir le limiteur de courant de l'amplificateur 408 en agissant sur la connexion 4083; cette perturbation de l'exécution de la commande $S_0$ = 1 est transmise par l'inverseur 414 au "ET" 413, dont la sortie passe à zéro, ce qui bloque l'optocoupleur 415; le "OU EXCLUSIF" 417 reçoit alors des signaux différents; il engendre un 1 correspondant à un défaut de non concordance entre signal de commande $S_0$ et état de sortie 40b de la voie correspondante.

De même, si l'absence de tension externe entre les plages 40a et 40c, ou tout autre défaut de cette sortie, empêche la tension d'apparaître entre les plages 40b et 40c, malgré la présence d'une commande $S_0$ = 1, le circuit 412 constate cette absence de tension et engendre un zéro, ce qui bloque aussi l'optocoupleur 415 et engendre encore un signal de défaut à la sortie du "OU EXCLUSIF" 417. D'autre part, dans le cas d'une sortie dégradée restant conductrice malgré un signal de commande à zéro, la non concordance engendre encore D. Pour limiter le coût supplémentaire de ces circuits de contrôle, les signaux de défaut issus des circuits 417 de chaque voie sont tous regroupés par le circuit "OU" 418, dont la sortie est filtrée par le circuit à résistance-capacité 419 pour éviter des alarmes fugitives dues aux temps de commutation des composants; le signal D commun aux huit voies de la carte est inversé par le circuit 420 et commande la diode électroluminescente de visualisation de défaut 401 par l'intermédiaire de la résistance 421; cette diode de visualisation de défaut, de couleur différente, est montée face à un guide de lumière libre du bornier.

D'autre part, ce signal D = 1 met à 1 la sortie du "OU" 423, ce qui empêche la carte de renvoyer un signal ACK = 0 lors de sa sélection par MS et AS = 0; l'unité centrale est donc informée d'une anomalie d'exécution de ses ordres par la carte de sortie concernée et réagit selon la procédure de défaut adoptée par le concepteur en ce qui concerne les huit sorties concernées (maintien en fonctionnement dégradé avec alarme ou arrêt sur défaut de l'ensemble de l'automatisme). On notera aussi que le signal D est appliqué en $Y_3$ comme élément du code module que l'unité centrale peut lire dans des conditions décrites plus loin.

On va maintenant expliquer le rôle des contacts de présence bornier 61 et 62:

Lorsqu'on commence à déconnecter le bornier de raccordement extérieur de la carte de la figure 9 alors que sa sortie $S_0$ est conductrice, l'un des contacts 61, 62 s'ouvre le premier et B passe à 1; la sortie de l'inverseur 431 passe alors à zéro et le "NON ET" 430 passe A à 1, ce qui provoque une remise à zéro des huit voies des registres 402 et 403 avant que les liaisons de sortie 40/60 soient ouvertes; cette remise à zéro automatique en début de déconnexion de bornier évite donc des coupures en charge qui pourraient détériorer les liaisons 40/60.

Ce signal B est par ailleurs exploité par le circuit "OU" 423 pour avertir l'unité centrale d'une anomalie en empêchant la carte sélectionnée par MS et RS = 0 de répondre, car le signal ACK reste alors à 1. On notera encore que ce même signal B est appliqué en $Y_2$ comme élément du code module accessible par l'unité centrale en lecture.

La description détaillée qui précède et concerne les fonctions d'écriture de la carte de la figure 4 et, plus spécialement, de sa voie $S_0$; est applicable aux sept autres sorties, à condition de respecter la sélection H/L pour l'adressage des commandes respectives selon la table de vérité donnée pour le circuit 426.

On expliquera maintenant le fonctionnement des dispositifs mis en oeuvre lors d'une lecture. Sur la carte de sortie de la figure 4, les éléments accessibles par l'unité centrale en lecture constituent le mot d'état de ladite carte, qui comporte les six bits du code module spécifique à la fonction de sortie concernée (type, modularité, etc.) et les signaux bornier B et défaut D décrits précédemment.

Si l'on considère, par exemple, la lecture des quatre derniers bits ci-dessus énumérés, leur sélection est faite par l'unité centrale selon la table de vérité du décodeur 426 par les signaux de sélection de cette carte MS et RS = 0, R/W, D/C et H/L = 1; ce décodeur engendre alors DISA et CF = 0.

Le signal $C_F$ = 0 applique le mot à lire aux quatre sorties $2_0$ à $2_3$ de l'interface 422, sorties reliées aux entrées de même nom de l'interface 425; le signal DISA = 0 appliqué par la ligne 4256 valide l'interface 425 et ce mot apparaît sur les lignes $A_0$ à $A_3$ et les plages $D_0$ à $D_3$ raccordées au bus.

Le circuit 422 calcule alors la parité de ce mot en combinaison avec le signal H/L = 1 et cette parité à la source est appliquée à la ligne PAR du bus via la ligne $A_5$ de l'interface 425 dont la validation des sorties $A_4$ et $A_5$ est effectuée par le signal DISA = 0 via le circuit ET 429 qui retransmet ce zéro à la connexion 4250 dudit circuit d'interface 429 cette validation relie la sortie du circuit "OU" 423 à la ligne ACK du bus, qui ne sera donc à zéro qu'en l'absence de défaut D et si le bornier est en place B = 0.

Recevant sur le bus les données $D_0$ à $D_3$ et la parité calculée à la source, elle calcule la parité reçue en combinaison avec H/L = 1 et ne valide cette lecture de vérification d'état de configuration que si ces parités sont identiques. Dans les mêmes conditions, excepté le signal H/L mis à zéro, l'unité centrale effectue la lecture des quatre bits de poids faibles du code module associés à leur parité à la source et au signal ACK si B et D = 0.

On notera que l'absence de ACK = 0 signale une anomalie à l'unité centrale, mais ne l'empêche, ni de lire le mot d'état, ni d'écrire les sorties qui fonctionnent sur une carte présentant des anomalies et un signal D = 1; seule la déconnexion du bornier empêche l'écriture des sorties en les forçant à zéro.

La figure 5 donne un exemple de réalisation de carte à huit sorties à relais pour courant alternatif, n'utilisant que deux bornes de raccordement par voie et comportant les mêmes contrôles de fonctionnement que celle de la figure 4.

Pour désigner les éléments et circuits identiques à ceux de la figure 4, on a fait passer de 4 à 5 le chiffre des centaines.

La description de la figure 5 sera limitée aux nouveaux dispositifs qu'elle comporte et dont les numéros ont été changés.

Le nouveau circuit de sortie concerné est entièrement situé entre la sortie de l'inverseur 505 et les entrées des circuits de contrôle 513 et 514.

Le signal de sortie de cet amplificateur inverseur 505 commande un relais 532 dont la bobine est montée en parallèle avec une diode de récupération et dont le contact est monté en série avec un détecteur de surintensité 534 et un circuit de contrôle de courant de sortie 536 entre les plages 40c et 40b.

Lorsque la sortie du registre 502 est à 1, le relais 532 est excité; son état est visualisé par la diode électroluminescente 504 et son contact ferme le circuit série précité entre les plages 40c et 40b. Si le circuit externe, qui comprend une alimentation et un actionneur commandé en sortie, fonctionne normalement, le détecteur de surintensité 534 reste à zéro, tandis que le contrôleur de courant de sortie 536 passe à 1; le "OU EXCLUSIF" 517 constate alors la concordance entre le signal de commande $S_0$ et son exécution.

Comme précédemment, dans les différents cas de non concordance, ledit circuit 517 engendre un signal de défaut visualisé et exploité dans les mêmes conditions.

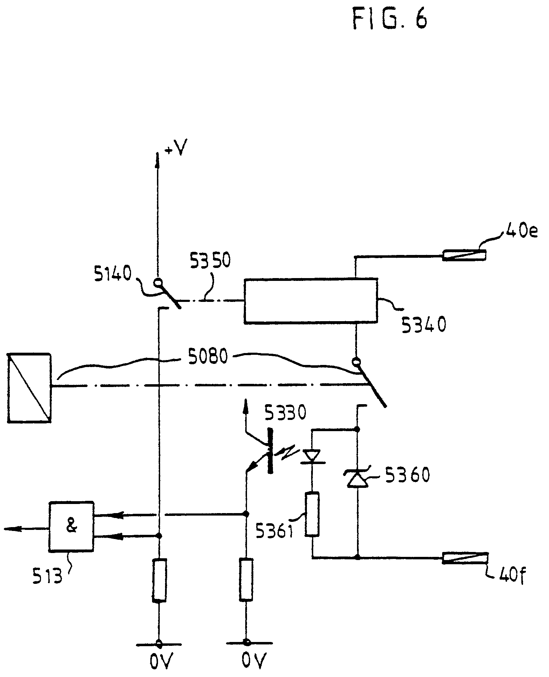

La figure 6 illustre un exemple de réalisation des fonctions 534 et 536, en mettant en oeuvre un détecteur de surintensité constitué d'un fusible à percuteur 5340 qui actionne un contact 5140 par l'intermédiaire d'une pièce isolante 5350 et un contrôle de courant de sortie réalisé à l'aide d'une diode Zener série de faible tension 5360, en parallèle avec la diode émettrice d'un optocoupleur 5330 et une résistance 5361.

Le reste du schéma de la figure 5 étant identique à celui de la figure 4, on y retrouve l'ensemble des éléments de dialogue avec l'unité centrale, éléments dont le fonctionnement a été décrit ci-dessus.

## Revendications

1. Dispositif d'Entrée/Sortie connectable par un bus de liaison de données et d'adresses, à une unité centrale d'un automate programmable, ce dispositif comprenant une gamme de cartes d'Entrée/Sortie (4) portant chacune un code d'identification spécifique accessible en lecture par l'unité centrale, ainsi que des moyens de multiplexage permettant à l'unité centrale de dialoguer avec lesdites cartes, chaque carte comportant:
- des bornes d'Entrée/Sortie ($D_0$-$D_3$) destinées à être reliées au bus,
- des bornes d'entrée (40b - 40c) destinées à être reliées à des capteurs (9),
- des bornes de sortie (40e - 40f) destinées à être connectées à des actionneurs (7), et
- une pluralité de circuits électroniques (300, 400, 500) reliant lesdites bornes d'Entrée/Sortie ($D_0$ - $D_3$) respectivement aux bornes d'entrée (40b - 40c) et aux bornes de sortie (40e - 40f), ces circuits électroniques (300, 400, 500) constituant des interfaces logiques entre, d'une part, le bus de liaison (2) avec l'unité centrale et, d'autre part, les capteurs (9) et les actionneurs (7),
caractérisé en ce que:
a) au moins l'un des susdits circuits électroniques (300) constituant un interface logique entre le bus (bornes $D_0$ - $D_3$) et un capteur (9) (bornes 40b, 40c) comprend:
. un premier dispositif de transmission avec découplage galvanique (302) entre son entrée et sa sortie, ce premier dispositif étant apte à recevoir les signaux d'entrée appliqués sur ses entrées et à transmettre auxdites bornes d'Entrée/Sortie ($D_0$ - $D_3$) un premier signal logique correspondant,
. un second dispositif de transmission avec découplage galvanique (304) entre son entrée et sa sortie, ce second dispositif étant apte à engendrer à partir desdits signaux d'entrée, un premier signal logique de référence, et
. un premier circuit de détection de non concordances (306) connecté aux sorties du premier et du second dispositifs de transmission pour détecter les non concordances entre le premier signal logique et le premier signal logique de référence;
b) au moins un des circuits électroniques (400) constituant un interface logique entre le bus (bornes $D_0$ - $D_3$) et un actionneur (7) (bornes 40e - 40f) comprend:
. un troisième dispositif de transmission avec découplage galvanique (407) entre son entrée et sa sortie, ce troisième dispositif étant apte à recevoir les signaux de commande destinés à cet actionneur, qui sont appliqués par le bus aux susdites bornes d'Entrée/Sortie ($D_0$ - $D_3$), et à transmettre aux bornes de sortie (40e - 40f) raccordées à cet actionneur un second signal logique correspondant,

. un quatrième dispositif de transmission avec découplage galvanique (415) entre son entrée et sa sortie, ce quatrième dispositif étant apte à recevoir les signaux de commande appliqués auxdites bornes de sortie (40e - 40f) et à engendrer un second signal logique de référence, et

. un second circuit de détection de non concordances (417) connecté aux sorties des troisième et quatrième dispositifs de transmission pour détecter les non concordances entre le second signal logique et le second signal logique de référence; et

c) l'échange de signaux entre l'unité centrale et ladite carte comporte les phases suivantes:

. une phase dans laquelle la carte adressée par l'unité centrale transmet à celle-ci un signal indicatif de l'absence de défaut de non concordance,

. une phase d'achèvement de l'échange par l'unité centrale suite à la réception dudit signal, et

. une phase au cours de laquelle l'unité centrale est avertie d'une anomalie locale lorsque la carte adressée par l'unité centrale ne renvoie pas ledit signal d'absence de défaut de non concordance.

2. Dispositif selon la revendication 1,
caractérisé en ce qu'il comprend en outre pour au moins l'une des sorties:
- des moyens de détection (409, 412) de tension et/ou de courant de charge raccordés à ladite sortie,
- et/ou un limiteur d'intensité associé à des moyens de signalisation de l'intervention dudit limiteur d'intensité,
- et/ou un fusible à percuteur (5340) associé à des moyens de signalisation de la fusion dudit fusible.

3. Dispositif selon l'une des revendications 1 et 2, caractérisé en ce qu'il comprend un regroupement par fonction "OU" (307, 418) des moyens pour la détection de la non concordance, associés à plusieurs circuits électroniques (300, 400).

4. Dispositif selon l'une des revendications 1, 2 et 3,
caractérisé en ce qu'il comprend des moyens de visualisation locale (301, 401, 501) des défauts de non concordance par voie ou commune à plusieurs circuits électroniques (300, 400).

5. Dispositif selon l'une des revendications 1, 2, 3 et 4,
caractérisé en ce qu'il comprend un codage logique des défauts de non concordance détectés.

6. Dispositif selon la revendication 1 comprenant un bornier de raccordement extérieur (6) assurant la connexion entre chaque carte d'Entrée/Sortie et les ensembles de capteur ou d'actionneur,
caractérisé en ce que l'ensemble bornier (6), carte (4) comporte:
- des moyens (41, 42, 43, 44, 61, 62) pour la détection du mouvement initial avant déconnexion et du mouvement final après reconnexion dudit bornier de raccordement extérieur (6) sur la carte d'Entrée/Sortie (4) correspondante, et
- des moyens de codage de ce signal de déconnexion du borner (6),
et en ce que ledit signal de mouvement initial avant déconnexion du bornier (6) provoque, avant l'ouverture des circuits de sortie, la remise à zéro de toutes les sorties de la carte (4).

7. Dispositif selon la revendication 6,
caractérisé en ce qu'il comprend en plus un circuit (307, 418) regroupant les signaux de défaut de non concordance et de mouvement initial de déconnexion ou de connexion complète du bornier (6) de raccordement externe.

8. Dispositif selon la revendication 1,
caractérisé en ce que la susdite détection d'anomalie locale est exploitée par l'unité centrale, en fonction de l'adresse de la carte (4), pour provoquer un arrêt sur défaut ou un maintien en fonctionnement dégradé de l'automatisme concerné.

9. Dispositif selon l'une des revendications précédentes,
caractérisé en ce que l'unité centrale, détectant ladite anomalie locale, effectue la lecture des informations détaillées de défaut et de bonne connexion du bornier (6) pour identifier ladite anomalie.

**Patentansprüche**

1. Eine über einen Daten- und Adressenbus mit der Zentraleinheit eines programmierbaren Automaten verbindbare Ein- und Ausgangsvorrichtung, wobei diese Vorrichtung eine Reihe von Ein/Ausgangskarten (4) aufweist, die jeweils mit einem spezifischen Identifizierungscode versehen sind, der von der Zentraleinheit abgelesen werden kann, sowie Multiplexmittel, welche den Dialog der Zentraleinheit mit besagten Karten ermöglichen, und besagte Karten aufweisen:
- Ein/Ausgangsklemmen ($D_0$ - $D_3$) zum Anschluss an den Bus,
- Eingangsklemmen (40b - 40c) zum Anschluss an Erfassungsmittel (9),
- Ausgangsklemmen (40e - 40f) zum Anschluss an Betätigungsmittel (7), und
- eine Vielzahl von elektronischen Schaltungen (300, 400, 500) die besagte Ein/Ausgangsklemmen ($D_0$ - $D_3$) jeweils mit den Eingangsklemmen (40b - 40c) und Ausgangsklemmen (40e - 40f) verbinden,
wobei besagte elektronische Schaltungen (300, 400, 500) logische Nahtstellen einerseits zwischen dem Verbingungsbus (2) und der Zentraleinheit und anderseits den Erfassungs-(9) und Betätigungsmitteln (7) bilden,

**EP 0 144 372 B1**

dadurch gekennzeichnet, dass

a) mindestens eine der besagten elektronischen Schaltungen (300), die eine logische Nahstelle zwischen dem Bus (Klemmen $D_0$ - $D_3$) und einem Erfassungsmittel (9) (Klemmen 40b, 40c) bildet, aufweist:

. eine erste Übertragungsvorrichtung mit galvanischer Entkuppelung (302) zwischen ihrem Eingang und ihrem Ausgang, wobei besagte erste Vorrichtung an ihre Eingänge angelegte Eingangssignale empfangen und an besagte Eingangs/ Ausgangsklemmen ($D_0$ - $D_3$) ein entsprechenden erstes logisches Signal übermitteln kann,

. eine zweite Übertragungsvorrichtung mit galvanischer Entkuppelung (304) zwischen ihrem Eingang und ihrem Ausgang, wobei besagte zweite Vorrichung, von besagten Eingangssignalen ausgehend, ein erstes Referenzsignal erzeugen kann und

. einen ersten Kreis zur Erfassung von Nichtübereinstimmungen (306) der an die Ausgänge der ersten und zweiten Übertragungsvorrichtung angeschlossen ist, um Nichtübereinstimmungen zwischen dem ersten logischen Signal und dem ersten logischen Referenzsignal zu erfassen,

b) wobei mindestens einer der elektronischen Schaltkreise (400), der eine logische Nahtstelle zwischen dem Bus (Klemmen $D_0$ - $D_3$) und einem Betätigungsmittel (7) (Klemmen 40e - 40f) bildet, aufweist:

. eine dritte Übertragungsvorrichtung mit galvanischer Entkuppelung (407) zwischen ihrem Eingang und Ausgang, wobei besagte dritte Vorrichtung für besagtes Betätigungsmittel bestimmte Steuersignale empfangen kann, die vom Bus an besagte Ein/Ausgangsklemmen ($D_0$ - $D_3$) angelegt werden und der an die an besagtes Betätigungsmittel angeschlossenen Ausgangsklemmen (40e - 40f) ein zweites entsprechendes logisches Signal übermitteln kann,

. eine vierte Übertragungsvorrichtung mit galvanischer Entkuppelung (415) zwischen ihrem Eingang und ihrem Ausgang, wobei diese vierte Vorrichtung die an besagte Ausgangsklemmen (40e - 40f) angelegten Steuersignale empfangen und ein zweites logisches Referenzsignal erzeugen kann, und

. einen zweiten Schaltkreis zur Erfassung von Nichtübereinstimmungen (417), der an die Ausgänge der dritten und vierten Übertragungsvorrichtung angeschlossen ist und Nichtübereinstimmungen zwischen dem zweiten logischen Signal und dem zweiten logischen Referenzsignal erfasst und

c) der Austausch von Signalen zwischen der Zentraleinheit und besagter Karte folgende Phases aufweist:

. eine Phase, während der die von der Zentraleinheit adressierte Karte an diese ein Signal, welches das Nichtvorhandensein eines Übereinstimmungsdefekts anzeigt, übermittelt,

. eine Phase zur Vollendung des Austausches durch die Zentraleinheit, nach Empfang des besagten Signals, und

. eine Phase, in deren Verlauf die Zentraleinheit gewarnt wird, dass eine lokale Anomalie besteht, wenn die von der Zentraleinheit adressierte Karte nicht das besagte Signal, dass kein Nichtübereinstimmungsdefekt vorhanden ist, zurückschickt.

2. Vorrichtung nach Anspruch 1,
dadurch gekennzeichnet, dass sie ausserdem für mindestens einen der Ausgänge aufweist:

- an besagten Ausgang angeschlossene Ladespannungs- oder Ladestromerfassungsmittel (409, 412),

- und/oder einen Strombegrenzer, dem Mittel, welche eine Einwirkung des Strombegrenzers anzeigen zugeordnet sind,

- und/oder eine Schalgbolzensicherung (5340), der Mittel zur Anzeige der Schmelzung der Sicherung zugeordnet sind.

3. Vorrichtung nach einem der Ansprüche 1 und 2, dadurch gekennzeichnet, dass sie eine Gruppierung gemäss der ODER-Funktion (307, 418) der mehreren elektronischen Schaltkreisen (300, 400) zugeordneten Mittel zur Erfassung der Nichtübereinstimmung aufweist.

4. Vorrichtung nach einem der Ansprüche 1, 2 und 3,
dadurch gekennzeichnet, dass sie Mittel (301, 401, 501) zur lokalen Anzeige der Nichtübereinstimmungsdefekte pro Linie oder für mehrere elektronische Schaltungen (300, 400) gemeinsam aufweist.

5. Vorrichtung nach einem der Ansprüche 1, 2, 3 und 4,
dadurch gekennzeichnet, dass sie eine logische Codierung der erfassten Nichtübereinstimmungsdefekte aufweist.

6. Vorrichtung nach Anspruch 1, die eine Klemmleiste (6) für den Aussenanschluss aufweist, welche die Verbindung zwischen jeder Ein/Ausgangskarte und den Erfassungs- oder Betätigungseinheiten herstellt, dadurch gekennzeichnet, dass die Einheit Klemmleiste (6)-Karte (4) aufweist:

- Mittel (41, 42, 43, 44, 61, 62) zur Erfassung der Anfangsbewegung vor dem Abzug der besagten Klemmleiste (6) und der Endbewegung nach dem Wiederanschluss dieser Aussenanschlussklemmleiste an die betreffende Ein/Ausgangskarte, und

- Mittel zur Codierung dieses Signals, welches den Abzug der Klemmleiste (6) anzeigt,

und dass besagtes Signal, welches eine Anfangsbewegung vor dem Abzug der Klemmleiste (6) anzeigt, vor Öffnung der Ausgangsschaltungen die Rückstellung auf Null aller Karten (4)-ausgänge bewirkt.

7. Vorrichtung nach Anspruch 6,
dadurch gekennzeichnet, dass sie ausserdem einen Schaltkreis (307, 418) enthält, der alle Signale, welche einen Nichtübereinstimmungsdefekt und eine Anfangsbewegung beim Abzug oder beim vollständigen Anschluss der Aussenanschlussklemmleiste (6) anzeigen, gruppiert.

8. Vorrichtung nach Anspruch 1,
dadurch gekennzeichnet, dass besagte Erfassung einer lokalen Anomalie von der Zentraleinheit je nach der Adresse der Karte (4) umgesetzt wird, um entweder einen Stillstand des betreffenden Automaten wegen eines Defektes zu bewirken oder aber einen herabgesetzten Betrieb.

9. Vorrichtung nach einem der vorhergehenden Ansprüche, dadurch gekennzeichnet, dass, wenn die Zentraleinheit besagte lokale Anomalie erfasst, diese die genauen Informationen, den Defekt und den korrekten Anschluss der Klemmleiste (6) betreffend abliest, um besagte Anomalie zu identifizieren.

**Claims**

1. Input/output device connectable by means of a connecting data and address bus to a central unit of a programmable controller, said device comprising a number of input/ output boards (4), each having a specific identification code accessible for reading by the central unit, and multiplexing means allowing the central unit to dialogue with said boards, each board comprising:
- input/output terminals ($D_0$ - $D_3$) adapted for being connected to the bus,
- input terminals (40b - 40c) adapted for being connected to sensors (9),
- output terminals (40e - 40f) adapted for being connected to actuators (7), and
- a plurality of electronic circuits (300, 400, 500) connecting said input/output terminals ($D_0$ - $D_3$) respectively to the input terminals (40b - 40c) and to the output terminals (40e - 40f) said electronic circuits (300, 400, 500) forming logic interfaces between, on the one hand, the connecting bus (2) and the central unit and, on the other hand, the sensors (9) and the actuators (7)

characterized in that

a. at least one of said electronic circuits (300) forming a logic interface between the bus (terminals $D_0$ - $D_3$) and a sensor (9) (terminals 40b, 40c) comprises:
- between its input and its output, a first galvanic decoupling transmission means (302, this first device being adapted for receiving the input signals applied to its inputs and for transmitting to said input/output terminals ($D_0$ - $D_3$) a corresponding first logic signal,
- a second galvanic decoupling means (304) for transmitting between its input and its output, said second device being adapted for generating from said input signals a first reference logic signal, and
- a first non concordance detection circuit (306) connected to the outputs of the first and the second transmission devices for detecting non concordances between the first logic signal and the first reference logic signal;

b. at least one of the electronic circuits (400) forming a logic interface between the bus (terminals $D_0$ - $D_3$) and an actuator (7) (terminals 40e - 40f) comprises:
- a third galvanic decoupling device (407) transmitting between its input and its output, said third device being adapted for receiving control signals provided for said actuator, which are applied by the bus to said input/output terminals ($D_0$ - $D_3$), and for transmitting to the output terminals (40e - 40f) connected to said actuator a second corresponding logic signal,
- a fourth galvanic decoupling device (415) transmitting between its input and its output said fourth device being adapted for receiving the control signals applied to said output terminals (40e - 40f) and for generating a second reference logic signal, and
- a second non concordance detection circuit (417) connected to the outputs of the third and fourth transmission devices for detecting non concordances between the second logic signal and the second reference logic signal, and

c. the exchange of signals between the central unit and said board comprising the following phases:
- a phase in which the board addressed by the central unit transmits thereto a signal indicating the absence of a non concordance defect,
- a phase for finishing the exchange by the central unit following reception of said signal, and
- a phase during which the central unit is warned of a local anomaly when the board addressed by the central unit does not return said signal indicating the absence of a non concordance defect.

2. Device according to claim 1, characterized in that it further comprises for at least one of the outputs:
- load voltage and/or current detection means (409, 412) connected to said output,
- and/or a current limiter associated with means signalling the intervention of said current limiter
- and/or a plunger fuse (5340) associated with means signalling the fusion of said fuse.

3. Device according to one of claims 1 and 2, characterized in that it comprises "OR" function grouping (307, 418) of the means for detecting non concordance, associated with several electronic circuits (300, 400).

4. Device according to one of claims 1, 2 and 3, characterized in that it comprises means (301, 401, 501) for local display of the non concordance defects for each channel or common to several circuits (300, 400).

5. Device according to one of claims 1, 2, 3 or 4, characterized in that it comprises logic coding of the non concordance defects detected.

6. Device according to claim 1, comprising an external connection terminal strip (6) providing connection between each input/output board and the sensor or actuator assemblies, characterized in that the terminal strip (6) board (4) assembly comprises:
- means (41, 42, 43, 44, 61, 62) for detecting the initial movement before disconnection and the final movement after reconnection of said external connection terminal strip (6) on the corresponding input/output board (4), and
- means for coding said disconnection signal of the terminal strip (6)
and in that said signal indicating an initial movement before disconnection of the terminal strip (6) causes, before opening of the output circuits, resetting to zero of all the outputs of the board (4).

7. Device according to claim 6, characterized in that it further comprises a circuit (307, 418) grouping the non concordance defect signals and the initial disconnection or complete connection movement signals of the external connection terminal strip (6).

8. Device according to claim 1, characterized in that said local anomaly detection is used by the central unit, in relation with the address of the board (4), for causing a defect shut down or maintenance with reduced operation of the controller in question.

9. Device according to one of the preceding claims, characterized in that the central unit detecting said local anomaly reads the detailed information concerning a defect and correct connection of the terminal strip (6), in order to identify said anomaly.

FIG.1

EP 0 144 372 B1

FIG. 2

EP 0 144 372 B1

FIG. 3

FIG. 4

FIG.5

FIG. 6